# EUROPEAN PATENT APPLICATION

(11) **EP 3 702 872 A1**
(43) Date of publication of application: **02.09.2020**
(21) Application number: 19159661.8
(22) Date of filing: 27.02.2019
(51) Int. Cl.: G05D 7/00, F16K 31/06, G05D 7/01

(54) **PRESSURE INDEPENDENT CONTROL VALVE**

(71) Applicant: Siemens Schweiz AG, 8047 Zürich (CH)
(72) Inventor: Petry, Karl-Heinz, 8864 Reichenburg (CH); Malik, Naveen, 6313 Edlibach (CH); Wüest, Matthias, 6003 Luzern (CH)
(74) Representative: Maier, Daniel Oliver

(57) **Abstract**

A pressure independent control valve wherein a maximum valve position indicative of a flow rate limit can be set so that a flow rate through the pressure independent control valve is less than or is equal to the flow rate limit; wherein the pressure independent control valve is configured such that the maximum valve position of the pressure independent control valve can be set as a part value with respect to a complete opening of the pressure independent control valve; wherein an operating range of the pressure independent control valve can be set as a range between the set maximum valve position and a closed position of the pressure independent control valve; wherein a signal regulating range of the pressure independent control valve can be mapped onto the operating range; wherein the pressure independent control valve comprises a controller (29) to which the maximum valve position can be supplied electronically.

## Description

### Background

The present disclosure relates to a pressure independent control valve. The present disclosure focuses on a control valve wherein the flow of a fluid is a function of the position of a throttle. More particularly, the control valve as disclosed herein achieves a flow rate that is substantially independent of the pressure at the outlet of the valve.

Flow control valves are commonly employed in HVAC (heating, ventilation, air conditioning) systems of structures. These systems typically convey a fluid such as water through a circuit in order to provide heating or cooling. The purpose of a flow control valve is controlled flow of a fluid through the conduits of the circuit.

The amount of water flowing through the valve is substantially governed by the position of the throttle. The position of the throttle is typically set by an actuator. The actuator sets the position of the throttle in response to a signal from a controller.

The European patent application EP2937759A1 was filed on 4 April 2014. EP2937759A1 was published on 28 October 2015. The patent application EP2937759A1 teaches a pressure regulated valve with a valve body 1, with an inlet port 2 and with an outlet port 3. A piston 9 is arranged in a fluid path 4 extending between the inlet port 2 and the outlet port 3. A spring 13 urges the piston 9 to open the fluid path 4. A channel 15 connects the inlet port 2 to a first end of the piston 9. The channel 15 is separated from the outlet port 3 of the valve via a diaphragm 18. Due to the channel 15 and the diaphragm 18, the piston 9 moves in response to a pressure drop between the inlet port 2 and the outlet port 3.

An international patent application WO2010/010092A2 was filed on 21 July 2009. The application WO2010/010092A2 was published on 28 January 2010. WO2010/010092A2 teaches a method for the hydraulic compensation and control of a heating or cooling system. WO2010/010092A2 also teaches a control valve for such purposes. A maximum set point value can be set for the control valve of WO2010/010092A2. That maximum value can be set to a percentage value with respect to a fully open position of the valve. The control valve then operates between a closed position and the maximum set point value.

The maximum set point value can be fed to a controller of the valve either manually or electronically. An operating range is thereby defined between the closed position of the valve and the set maximum set point value. The control unit can then map a signal regulating range of the valve to the newly defined operating range.

WO2010/010092A2 makes no mention of a pressure independent control valve.

An international patent application WO95/17622A1 was filed on 13 December 1994. The application WO95/17622A1 was published on 29 June 1995. WO95/17622A1 teaches a differential pressure valve for controlling a system having a heat carrying medium. The valve 1 according to WO95/17622A1 couples to a motor 20. A displacement of the valve member between the closed position and the open position can be preset electrically in the motor 20. A control unit 30 supplies the motor 20 with electric voltage.

WO95/17622A1 makes no mention of an arithmetic logic unit mapping a signal regulating range onto an operating range.

The present disclosure teaches a pressure independent control valve that automatically sets a position of a throttle of a control valve. The instant disclosure improves on pressure independent control valves by harnessing electronic controllers.

### Summary

The present disclosure leverages the capacities of valve controllers by electronically implementing maximum valve positions. That is, mechanical adjustments by operators are no longer required to set maximum positions of valve members. The present disclosure applies its teachings to throttles of pressure independent control valves. Maximum flow rates through pressure independent control valves are defined by limiting positions of such throttles. Since flow rates through pressure independent control valves are largely independent of pressure drop, limitations of the positions of such throttles also define operational flow rates through the valves.

Settings of valves as disclosed herein can be configured remotely rather than on-site via mechanical adjustments. The instant disclosure yields improvements in regard to commissioning and maintenance of circuits with pressure independent control valves. Electronically implemented maximum valve positions afford circuits that largely dispense with on-site maintenance and commissioning activities for such circuits. It is also an object of the instant disclosure to make optimum use of the computation capacity of a microcontroller or of a microprocessor within the controller. The microcontroller or microprocessor can also be employed for other purposes such as calculations of flow rates.

It is a further object of the present disclosure to harness commercially available drives relying on analog signals in the ranges between
0 Volt and 2 Volts,
0 Volt and 3 Volts,
0 Volt and 3.3 Volts,
0 Volt and 5 Volts, or
0 Volt and 10 Volts, or
0 millliAmpere and 20 milliAmperes.

It is a further object of the present disclosure to harness commercially supervisory equipment with analog interfaces, the analog interfaces transmitting position signals in the ranges between
0 Volt and 2 Volts,
0 Volt and 3 Volts,
0 Volt and 3.3 Volts,
0 Volt and 5 Volts, or
0 Volt and 10 Volts, or
0 millliAmpere and 20 milliAmperes.

It is yet another object of the present disclosure to limit within the pressure independent control valve the number of components that are prone to failure. To that end, a single bus can be employed that passes both data and electric energy along the bus. Also, analog-to-digital converters and/or delta-sigma modulation circuits can be employed that are arranged on the same system-on-a-chip together with together with a microprocessor or a microcontroller. These measures also reduce the complexity of the system.

### Brief description of the drawings

Various features will become apparent to those skilled in the art from the following detailed description of the disclosed non-limiting embodiments. The drawings that accompany the detailed description can be briefly described as follows:
FIG 1 is a cut-away view of a pressure independent control valve according to this disclosure.
FIG 2 is a plot of flow rate versus pressure difference.
FIG 3 schematically illustrates various signals applicable to an arrangement of the present disclosure.

### Detailed description

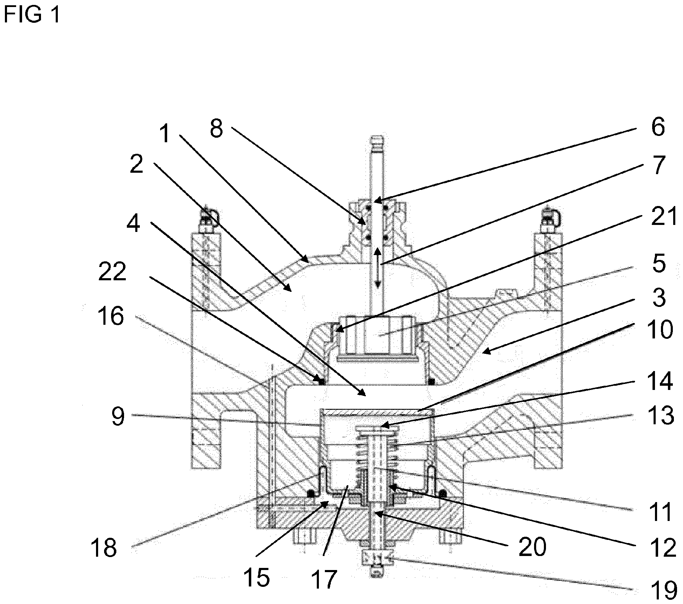

FIG 1 shows the various principal and optional components of the pressure independent control valve of the instant disclosure. The pressure control valve comprises a valve body 1 with openings forming an inlet port 2 and an outlet port 3. The inlet port 2 and the outlet port 3 afford flow of a fluid through the valve. In a preferred embodiment, the fluid comprises a liquid. In particularly preferred embodiment, the fluid flowing through the valve comprises water or mixture containing water.

A fluid path 4 extends between the inlet port 2 and the outlet port 3. The fluid path 4 preferably comprises a fluid channel and/or a flow channel.

At the inlet port 2 of the pressure independent control valve, the fluid has a pressure of substantially p1. The pressure of the fluid at the outlet port 3 of the valve is substantially p3. The (overall) pressure of the fluid inside the fluid path 4 substantially is p2.

A throttle 5 is movably mounted inside a seat 21 in between the inlet port 2 and the fluid path 4. The position of the throttle 5 may change by moving a stem 6 back and forth along the direction indicated by the arrow 7. In an embodiment, the stem 6 is rotatable around the axis indicated by the arrow 7. In an alternate embodiment, the stem 6 is not rotatable around the axis indicated by the arrow 7.

The throttle 5 effectively varies and limits the flow rate of the fluid through the pressure independent control valve. To that end, the body of the throttle 5 can be fluid permeable.

A bearing 8 restricts the movement of the stem 6 against the valve body 1. Accordingly, the walls of the valve body surrounding the throttle 5 and the bearing 8 act as guide elements for the throttle 5.

The bearing 8 may be of the ball bearing type and/or of the friction-bearing type. It is envisaged that the bearing 8 also seals the pressure independent control valve so that no fluid will leak from the pressure independent control valve.

A (hollow) piston 9 is movably mounted inside another seat in the valve body 1. The hollow piston 9 has a cover 10 that is exposed to the pressure p2 in the fluid path 4. It is envisaged that the shape of the cover may be uneven or may be substantially flat. Those parts of the hollow piston 9 that are exposed to the pressure p2 inside the fluid path 4 are impermeable to fluid. Consequently, no fluid originating from the fluid path 4 will enter the piston 9 through the walls of the piston 9.

It is envisaged that a profile of the piston 9 can be circular, oval, triangular, quadratic, rectangular. The skilled person chooses any profile of the piston that meets technical requirements.

Any movement of the piston 9 is restricted by a seat in the valve body. Preferably, the seat for the piston 9 effectively restricts movement of the piston 9 to directions toward or away from the throttle 5. The walls of the seat can restrict movement of the piston 9 either through a friction-type bearing and/or through a ball bearing. It is envisaged that the bearing inhibits and/or prevents fluid flow through the passage in between the piston 9 and the walls of the seat in the valve body 1. It is also envisaged that the same bearing is optimized for low friction and/or for minimum hysteresis.

The pressure independent control valve comprises a further guide element 11 for the piston 9. The guide element 11 is arranged opposite the cover 10 and penetrates a bore through the piston 9. The bore through the piston 9 provides a sleeve 12 that is substantially parallel to the wall of the guide element 11. The sleeve 12 and the guide elements 11 substantially form a bearing. This bearing can be of the ball bearing or of the friction bearing type. The passage between the guide element 11 and the sleeve 12 needs not be fluid-tight. It is envisaged that the bearing formed by the sleeve 12 and by the guide element 11 is optimized for minimum friction and/or for minimum hysteresis.

The sleeve 12 and the guide element 11 restrict the movement of the piston 9 in the same manner as the aforementioned seat in the valve body 1. It follows that technical constraints such as the accuracy of guidance either through the sleeve 12 or through the seat in the valve body 1 can be relaxed to some extent.

The guide element 11 is surrounded by a biasing member 13. In a preferred embodiment, the biasing member 13 is a spring. In a yet more preferred embodiment, the biasing member 13 is a helical spring, in particular a helical compression spring. The biasing member 13 is mounted to an end 14 of the guide element 11. In a preferred embodiment, the guide element 11 provides a head 14 with a substantially flat surface that compresses the biasing member 13.

A channel 15, in general terms a reservoir 15, is arranged adjacent the piston 9. The channel 15 is in fluid communication with the inlet port 2 of the pressure independent control valve through a passageway 16. The channel 15 is also in fluid communication with the inside of the piston 9. The inside of the piston 9 and the reservoir 15 in this context form a chamber. The piston 9 is in general terms a displaceable element 9 or part of a displaceable element that separates the chamber from the fluid path 4. According to a particular embodiment, the displaceable element provides no holes, no orifices and no apertures. The holes, orifices and apertures would otherwise afford fluid flow between the chamber and the fluid path 4. In other words, the displaceable element 9 provides a simply connected surface within the topological meaning of the term simply connected.

One or several apertures 17 are located in a portion of the wall of the piston 9. That portion (otherwise) separates the channel 15 and the inside of the piston 9. Since the inlet port 2, the hollow piston 9, and the channel 15 are all in fluid communication, these parts (9, 15, 2, 16, 17) are exposed to substantially the same pressure p1.

A rolling diaphragm 18 contributes to separating the pressure p1 inside the annular channel from the pressure p2 inside the fluid path 4 of the valve. The rolling diaphragm 18 provides a seal in addition to the aforementioned bearing formed by the piston 9 and the seat in the valve body 1. In a preferred embodiment, the presence of the two seals implies that the technical constraints for each of the two seals can be relaxed. If the sealing effect of the rolling diaphragm 18 is sufficient, the interface between the piston 9 and the valve body 1 can be permeable to some extent. Consequently, a ball bearing can be arranged in between the piston 9 and the valve body 1. Movement of the piston 9 will then involve even less friction and/or even less hysteresis.

The rolling diaphragm 18 can be made of any suitable flexible material. In particular embodiments, the rolling diaphragm 18 is made of rubber and/or fabric coated rubber and/or biaxially-oriented polyethylene terephthalate (MYLAR®) and/or polyester film and/or metal foil.

During operation, the pressure p1 will exert a force to drive the piston 9 toward the throttle 5. The biasing member 13 will urge the piston 9 in the opposite direction away from the throttle 5. The width of a gap between the collar 22 and (the cover 10 of) the piston 9 is thus allowed to vary to some extent. The amplitude of the movement of the hollow piston 9 depends on the pressure difference between the inlet port 2 and the fluid path 4.

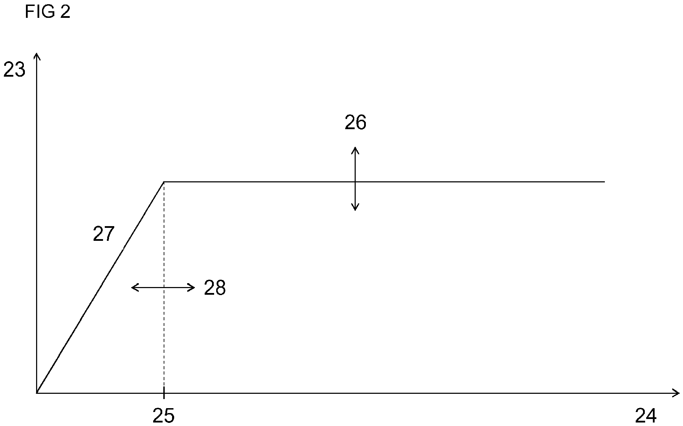

The position of the throttle 5 relative to its seat 21 and the position of the piston 9 relative to the collar 22 determine the flow rate through the valve. These positions are substantially independent of outlet pressure p3. Accordingly, the pressure independent control valve achieves a flow rate which is substantially independent of outlet pressure p3. The same is indicated on FIG 2, where a typical flow rate (axis 23) is plotted versus pressure difference (axis 24). The flow rate is substantially constant on the right hand side of the pressure difference 25.

Preferably, the piston 9 provides a surface 10 to separate the chamber from the fluid path 4. The same surface is larger than the corresponding surface provided by the diaphragm 18. In a yet more preferred embodiment, the area of the separating surface 10 of the piston 9 is at least twice the separating surface of the diaphragm 18. In a yet more preferred embodiment, the area of the separating surface 10 of the piston 9 is at least five times larger than the area of the separating surface of the diaphragm 18.

In a particular embodiment, the pressure independent control valve also comprises an adjusting bolt 19. The adjusting bolt 19 connects to the head 14 of the guide element 11 via a telescopic stem 20. By turning the bolt 19 it is possible to adjust the position of the head 14 of the guide element 11. Since the head 14 also connects to the biasing member 13, the bolt 19 can be used to adjust the bias applied by the member 13.

The bolt 19 is employed to alter the balance between the pressure inside the piston 9, the pressure in the fluid path 4 and the force applied by the biasing member 13. An adjustment of the bias applied by the member 13 has an effect on the maximum flow rate through the valve. The flow of fluid through the valve will depend on the gap between the hollow piston 9 and the collar 22. By altering the balance of pressures and forces inside the valve, this gap will also change. Consequently, an adjustment of the bias will impact on a maximum flow rate through the pressure independent control valve. Arrow 26 in FIG 2 indicates possible changes in the rate of fluid flow due to an adjustment of bias.

Actually, the flow of fluid through the valve is independent of outlet pressure p3 as soon as the pressure difference between the inlet port 2 and the outlet port 3 exceeds a threshold. Any difference between p1 and p2 is limited to the difference between p1 and p3. The pressure difference p1 - p2 between the inlet port 2 and the fluid path 4 cannot exceed that value. If the difference between p1 and p2 becomes too small, the flow rate through the valve will depend on a difference between inlet pressure p1 and outlet pressure p3. FIG 2 illustrates this regime as a line 25 having a positive slope.

As soon as the pressure difference 24 reaches the onset 25 of constant flow, the flow rate through the valve will substantially be independent of outlet pressure p3. By changing the position of the adjusting bolt 19, the pressure difference required to achieve constant flow will also change.

An adjustment 28 of the onset 25 of constant flow and of maximum flow rate confers benefits where pressure independent control valves need be accurate within certain limits. This is often the case in applications where a control valve renders a separate flow meter obsolete. Pressure independent control valves are then required to produce constant flow over a given range of pressure differences. Constant in this context means that the flow rate through the valve is determined by the position of the throttle 5.

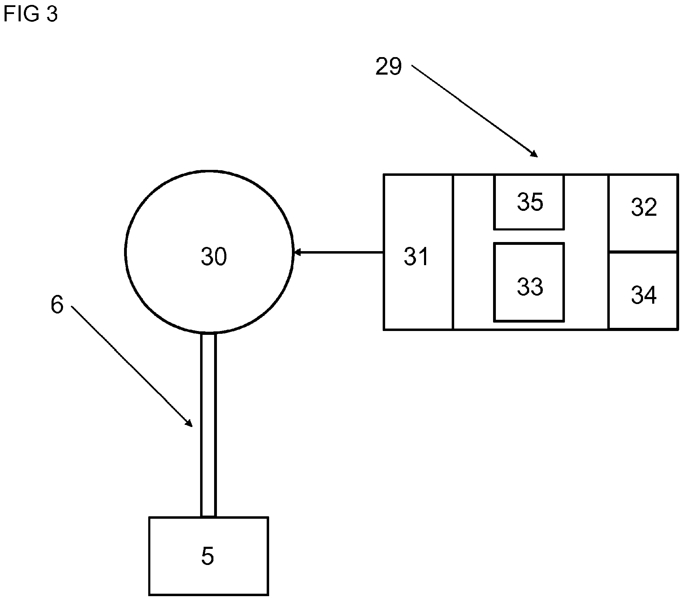

Now referring to FIG 3, details of an automated adjustment of maximum flow rate through the pressure independent control valve are provided. To that end, a controller 29 such as a microcontroller or a microprocessor is in operative communication with an actuator 30. An interface 31 such as an analog interface 31 affords communication between the controller 29 and the actuator 30. It is envisaged that the interface 31 transmits analog signals to the actuator 30, the analog signals falling within an operating range
between 0 Volt and 2 Volts, or
between 0 Volt and 3 Volts, or
between 0 Volt and 3.3 Volts, or
between 0 Volt and 5 Volts, or
between 0 Volt and 10 Volts, or
between 0 millliAmpere and 20 milliAmperes.

The interface 31 preferably enables unidirectional communication from the controller 29 to the actuator 30. A unidirectional link confers advantages in terms of reduced complexity.

The actuator 30 mechanically couples to the throttle 5. In a preferred embodiment, the actuator 30 couples to the throttle 5 via the stem 6.

The controller 29 receives signals via the signal regulating interface 32. The signal regulating interface 32 advantageously is an analog interface. The signal regulating interface 32 preferably receives signals falling within a signal regulating range
between 0 Volt and 2 Volts, or
between 0 Volt and 3 Volts, or
between 0 Volt and 3.3 Volts, or
between 0 Volt and 5 Volts, or
between 0 Volt and 10 Volts, or
between 0 millliAmpere and 20 milliAmperes.

The signal regulating interface 32 ideally comprises an analog-to-digital converter and/or a delta-sigma modulation circuit. The analog-to-digital converter and/or the delta-sigma modulation circuit of the signal regulating interface 32 changes an analog signal into a digital representation.

The regulating signal is then forwarded by the signal regulating interface 32 to an arithmetic logic unit 33. It is envisaged that the arithmetic logic unit 33 first checks if the regulating signal falls within the signal regulating range. That is, the regulating signal will be processed only if the regulating signal falls within the signal regulating range.

The arithmetic logic unit 33 then maps the regulating signal onto the operating range. The upper limit of the operating range can, by way of example, be lower than the upper limit of the signal regulating range. In this case, regulating signals exceeding the upper limit of the operating range are mapped onto the upper limit of the operating range. The upper limit of the operating range generally corresponds to or is a maximum valve position indicative of a flow rate through the pressure independent control valve.

The upper limit of the operating range is actually programmable. That is, the controller 29 receives settings signals via an input unit 34. These settings signals can be analog signals or digital signals. The settings signals can be supplied to the controller 29 by an input unit 34 such as a keyboard, a touch screen display or a rotatable ring. The input unit 34 preferably employs unidirectional communication to the controller 29. A unidirectional link confers advantages in terms of reduced complexity. The link can also afford bidirectional communication between the controller 29 and the input unit 34. A bidirectional link confers advantages in terms of more flexible and more nuanced communication.

It is envisaged that a maximum valve position can be supplied to the controller 29 via the input unit 34. It is further envisaged that a maximum valve position can be fed to the controller 29 via the input unit 34. It is also envisaged that a maximum valve position can be input into the controller 29 via the input unit 34.

According to an aspect, the controller 29 comprises a memory 35 such as a non-volatile memory. The controller 29 stores values such as limits of signal regulating ranges, (upper) limits of operating ranges and/or maximum valve positions in the memory 35. The controller 29 also reads values such as limits of signal regulating ranges, (upper) limits of operating ranges and/or maximum valve positions from the memory 35.

As described in detail herein, the instant disclosure teaches a pressure independent control valve, the pressure independent control valve being configured such that a maximum valve position indicative of a flow rate limit can be set so that a flow rate through the pressure independent control valve is less than or equals the flow rate limit;
wherein the pressure independent control valve is configured such that the maximum valve position of the pressure independent control valve can be set as a part value with respect to a complete opening of the pressure independent control valve;
wherein a first operating range of the pressure independent control valve can be set as a range between the set maximum valve position and a closed position of the pressure independent control valve;
wherein a signal regulating range of the pressure independent control valve can be mapped onto the first operating range;
wherein the pressure independent control valve comprises a controller (29) in which the maximum valve position can be input electronically for defining a second operating range of the pressure independent control valve as arranged between the input maximum valve position and the closed position; and
wherein the controller (29) comprises an arithmetic logic unit (33), the controller (29) being configured to employ its arithmetic logic unit (33) to map the signal regulating range onto the second operating range.

The flow rate limit corresponds to and/or is a limit that depends on the valve position. That is, valve positions correspond to and/or can be mapped onto flow rate limits. In an embodiment, the flow rate limit is a position-dependent flow rate limit.

The pressure independent control valve ideally has a signal regulating range. The pressure independent control valve preferably has a first operating range. The pressure independent control valve advantageously has a second operating range.

It is envisaged that the first operating range comprises a first plurality of valve positions and/or a first plurality of positions of the at least one throttle (5). It is envisaged that the second operating range comprises a second plurality of valve positions and/or a second plurality of positions of the at least one throttle (5). It is also envisaged that the first operating range is associated with a first plurality of valve positions and/or with a first plurality of positions of the at least one throttle (5). It is also envisaged that the second operating range is associated with a second plurality of valve positions and/or with a second plurality of positions of the at least one throttle (5). It is further envisaged that the signal regulating range comprises a plurality of regulating signals. Advantageously, each regulating signal of the plurality of regulating signals can be employed to regulate a valve position of the pressure independent control valve and/or a position of the at least one throttle (5). Regulation of the valve position and/or of the position of the at least one throttle (5) is preferably achieved using the controller (29). Regulation of the valve position and/or of the position of the at least one throttle (5) is still more preferably achieved using the controller (29) and employing the arithmetic logic unit (33).

In an embodiment, the pressure independent control valve comprises a controller (29) in which the maximum valve position can be input electronically thereby defining a second operating range of the pressure independent control valve (as arranged) between the input maximum valve position and the closed position.

According to an aspect of the instant disclosure, the maximum valve position of the pressure independent control valve can be set to at least seventy percent of a complete opening of the pressure independent control valve and/or to at least eighty percent of a complete opening of the pressure independent control valve and/or to at least ninety percent of a complete opening of the pressure independent control valve. Also, the input maximum valve position of the pressure independent control valve can be input as at least seventy percent of a complete opening of the pressure independent control valve and/or as at least eighty percent of a complete opening of the pressure independent control valve and/or as at least ninety percent of a complete opening of the pressure independent control valve. According to a particular aspect of the instant disclosure, the complete opening of the pressure independent control valve corresponds to a fully open position of the at least one throttle (5). The maximum valve position of the pressure independent control valve can then be set to at least seventy percent of a fully open position of the at least one throttle (5) and/or to at least eighty percent of a fully open position of the at least one throttle (5) and/or to at least ninety percent of a fully open position of the at least one throttle (5). Also, the input maximum valve position of the pressure independent control valve can then be input as at least seventy percent of a fully open position of the at least one throttle (5) and/or as at least eighty percent of a fully open position of the at least one throttle (5) and/or as at least ninety percent of a fully open position of the at least one throttle (5). A wide first operating range and a wide second operating range afford more flexible and more nuanced configurations of existing circuits for heating, ventilation and/or air conditioning.

It is envisaged that the controller (29) is configured to employ its arithmetic logic unit (33) to:
set a first operating range of the pressure independent control valve as a range between the set maximum valve position and a closed position of the pressure independent control valve; and
map a signal regulating range of the pressure independent control valve onto the first operating range.

The present disclosure also teaches any of the aforementioned pressure independent control valves, wherein the arithmetic logic unit (33) is configured to perform operations selected from
- addition,
- subtraction,
- logical AND, and
- logical OR.

The arithmetic logic unit (33) is preferably also configured to perform a comparison operation such as greater than and/or less than and/or equal to. In an embodiment, the arithmetic logic unit (33) performs the comparison operation between two signals by calculating a difference between the two signals. The arithmetic logic unit (33) then compares the calculated difference to zero.

The instant disclosure also teaches any of the aforementioned pressure independent control valves, the pressure independent control valve comprising at least one inlet port (2), at least one outlet port (3), and at least one fluid path (4) extending between the at least one inlet port (2) and the at least one outlet port (3);
the pressure independent control valve comprising at least one throttle (5) situated in the at least one fluid path (4); and
the pressure independent control valve being configured such that the input maximum valve position is also indicative of a maximum position of the at least one throttle (5).

The instant disclosure also teaches any of the aforementioned pressure independent control valves, the pressure independent control valve comprising at least one inlet port (2), at least one outlet port (3), and at least one fluid path (4) extending between the at least one inlet port (2) and the at least one outlet port (3);
the pressure independent control valve comprising at least one throttle (5) situated in the at least one fluid path (4); and
the pressure independent control valve being configured such that the input maximum valve position is also indicative of an input limit position of the at least one throttle (5) and/or indicative of a fully open position of the at least one throttle (5).

The present disclosure further teaches any of the aforementioned pressure independent control valves, wherein the at least one throttle (5) is movable between the closed position and the maximum valve position.

In an embodiment, the at least one throttle (5) is selectively moveable between the closed position and the maximum valve position.

The at least one throttle (5) ideally has an open position, in particular has a completely open position and/or a maximum valve position and/or a fully open position. The at least one throttle (5) preferably also has a closed position.

The instant disclosure further teaches any of the aforementioned pressure independent control valves, wherein the at least one throttle (5) is continuously movable between the closed position and the maximum valve position.

The instant disclosure still further teaches any of the aforementioned pressure independent control valves, wherein the closed position of the pressure independent control valve is associated with a closed position of the at least one throttle (5), the at least one throttle (5) in its closed position obturating fluid flow through the at least one fluid path (4).

The instant disclosure also teaches any of the aforementioned pressure independent control valves, wherein the closed position of the pressure independent control valve is a closed position of the at least one throttle (5), the at least one throttle (5) in its closed position obturating fluid flow through the at least one fluid path (4).

The instant disclosure yet further teaches any of the aforementioned pressure independent control valves, wherein the pressure independent control valve additionally comprises at least one actuator (30), the at least one actuator (30) mechanically coupling to the at least one throttle (5);
wherein the controller (29) additionally comprises at least one analog actuator interface (31), the controller (29) being in operative communication with the at least one actuator (30) via the at least one analog actuator interface (31);
wherein the controller (29) is configured to send a signal indicative of a valve position to the at least one actuator (30) via the at least one analog actuator interface (31); and
the signal indicative of a valve position causing the at least one actuator (30) to stroke the at least one throttle (5) to the indicated valve position.

It is envisaged that the at least one analog actuator interface (31) is an integral part of the controller (29). That is, the at least one analog actuator interface (31) and the controller (29) are part of the same system-on-a-chip. This type of arrangement results in a compact pressure independent valve. Also, the complexity of the circuitry is reduced.

An analog actuator interface (31) affords compatibility with commercially available actuators (30) such as commercially available drives.

In an embodiment, the at least one actuator (30) mechanically couples to the at least one throttle (5) via a stem (6) and/or via a shaft. To that end, the pressure independent control valve can comprise (a coupling means such as) the stem (6) and/or the shaft.

The present disclosure also teaches any of the aforementioned pressure independent control valves,
wherein the controller (29) is configured to send a signal indicative of the input maximum valve position to the at least one actuator (30) via the at least one analog actuator interface (31); and
wherein the signal indicative of the input maximum valve position causes the at least one actuator (30) to stroke the at least one throttle (5) to the input maximum valve position.

The instant disclosure also teaches any of the aforementioned pressure independent control valves,
wherein the flow rate through the pressure independent control valve is associated with a flow rate through the at least one fluid path (4);
wherein the complete opening of the pressure independent control valve is associated with a completely open position of the at least one throttle (5); and
wherein any movement of the at least one throttle (5) starting at the completely open position of the at least one throttle (5) reduces the flow rate through the at least one fluid path (4) or maintains a same flow rate through the at least one fluid path (4).

The instant disclosure also teaches a pressure independent control valve,
wherein the flow rate through the pressure independent control valve is a flow rate through the at least one fluid path (4);
wherein the complete opening of the pressure independent control valve is a completely open position of the at least one throttle (5); and
wherein any movement of the at least one throttle (5) starting from the completely open position of the at least one throttle (5) reduces the flow rate through the at least one fluid path (4) or maintains a same flow rate through the at least one fluid path (4).

The present disclosure further teaches any of the aforementioned pressure independent control valves, the pressure independent control valve comprising at least one chamber in fluid communication with the at least one inlet port (2) such that the pressure independent control valve is configured to apply substantially the same pressure at the at least one inlet port (2) and inside the at least one chamber; the at least one fluid path (4) comprising a fluid channel;
at least one displaceable element (9) having at least one piston, the at least one displaceable element (9) separating the at least one chamber from the fluid channel;
the at least one displaceable element (9) being moveable to increase a volume of the at least one chamber and to decrease a volume of the fluid channel such that the at least one displaceable element (9) lowers the flow rate through the at least one fluid path (4); and
the pressure independent control valve comprising at least one biasing member (13) configured to urge the at least one displaceable element (9) such that the at least one biasing member (13) urges the volume of the at least one chamber to decrease and the volume of the fluid channel to increase, thereby increasing the flow rate through the at least one fluid path (4).

The present disclosure still further teaches any of the aforementioned pressure independent control valves, the pressure independent control valve comprising a valve body (1), the valve body (1) comprising the at least one inlet port (2) and the at least one outlet port (3); and
the at least one displaceable element (9) comprising at least one diaphragm (18) mechanically mounted to the valve body (1).

The diaphragm (18) ideally is a flexible diaphragm. It is envisaged that the diaphragm (18) is a flexible rolling diaphragm made of rubber and/or of fabric coated rubber and/or of biaxially-oriented polyethylene terephthalate and/or of polyester film and/or of metal foil, and connects to the valve body (1). The flexible diaphragm (18) preferably is impermeable to fluid flow such that it (18) prevents fluid flow between the at least one chamber and the at least one fluid path (4).

The at least one displaceable element (9) is advantageously configured to separate the at least one chamber and the at least one fluid path (4) by means of a simply connected surface (9, 10, 18).

In an embodiment, the at least one chamber has at least one reservoir (15) and the at least one reservoir (15) and/or the inlet (2) are in fluid communication via at least one passageway (16). To that and, the valve also comprises the at least one passageway (16).

The instant disclosure yet further teaches any of the aforementioned pressure independent control valves, the pressure independent control valve comprising at least one input unit (34) in operative communication with the controller (29);
wherein the controller (29) is configured to:
read a setting signal from the at least one input unit (34); and
set the input maximum flow position based on the setting signal as a part value with respect to the complete opening of the pressure independent control valve.

It is envisaged that the at least one input unit (34) is selected from
- a keyboard,
- a touch screen display,
- a rotatable ring, the rotatable ring being configured to manipulate the setting signal in response to rotations of the rotatable ring.

A rotatable ring confers benefits in terms of more intuitive user input. The at least one input unit (34) is ideally configured to receive input from a user or from an operator.

The instant disclosure yet further teaches any of the aforementioned pressure independent control valves, the pressure independent control valve comprising at least one memory (35) in operative communication with the controller (29);
wherein the controller (29) is configured to:
read a setting signal from the at least one memory (35); and
set the input maximum flow position based on the setting signal as a part value with respect to the complete opening of the pressure independent control valve.

It is envisaged that the setting signal is not static. Instead, the controller (29) optimizes, in particular continuously optimizes, the setting signal. The controller (29) preferably has an optimization algorithm such as an optimization algorithm based on artificial intelligence, neural networks, fuzzy logics, and the like. The controller (29) employs the optimization algorithm to optimize the setting signal. The controller (29) can also communicate with a cloud computer in order to the optimization algorithm performed on the cloud computer. It is also envisaged that the controller (29) is configured to store optimized setting signal in the memory (35).

The instant disclosure also teaches any of the aforementioned pressure independent control valves, wherein the signal regulating range comprises a first regulating signal and a second regulating signal and a third regulating signal, the controller (29) being configured to:
employ the arithmetic logic unit (33) to map the first regulating signal to the input maximum valve position;
employ the arithmetic logic unit (33) to map the second regulating signal to the input maximum valve position, the second regulating signal being different from the first regulating signal; and
employ the arithmetic logic unit (33) to map the third regulating signal to a valve position between the closed position and the input maximum valve position, the third regulating signal being different from the first regulating signal and being different from the second regulating signal.

It is envisaged that the first regulating signal and the second regulating signal and the third regulating signal fall within and/or match the signal regulating range.

It is envisaged that the controller (29) is configured to employ the arithmetic logic unit (33) to map the third regulating signal to a position of the at least one throttle (5) between the closed position and the input maximum valve position.

The present disclosure further teaches any of the aforementioned pressure independent control valves,
wherein the signal regulating range comprises a fourth regulating signal, the controller (29) being configured to:
employ the arithmetic logic unit (33) to map the fourth regulating signal to the closed position, the fourth regulating signal being different from the first regulating signal and being different from the second regulating signal and being different from the third regulating signal.

It is envisaged that the fourth regulating signal falls within and/or matches the signal regulating range.

The present disclosure yet further teaches any of the aforementioned pressure independent control valves, the pressure independent control valve comprising at least one regulating interface (32) in operative communication with the controller (29);
wherein the controller (29) is configured to:
read an input regulating signal from the at least one regulating interface (32);
employ the arithmetic logic unit (33) to compare the input regulating signal to the signal regulating range; and
if the input regulating signal falls within the signal regulating range:
   employ the arithmetic logic unit (33) to map the input regulating signal to a valve position falling within the second operating range.

The controller (29) is preferably configured to:
employ the arithmetic logic unit (33) to compare the input regulating signal to the signal regulating range; and
if the input regulating signal falls within and/or matches the signal regulating range:
   employ the arithmetic logic unit (33) to map the input regulating signal to a valve position falling within and/or matching the second operating range.

It is envisaged that the controller (29) is configured to employ the arithmetic logic unit (33) to map the input regulating signal to a position of the at least one throttle (5) falling within and/or matching the second operating range.

The instant disclosure also teaches any of the aforementioned pressure independent control valves, the pressure independent control valve comprising at least one regulating interface (32) in operative communication with the controller (29);
wherein the controller (29) is configured to:
read a first input regulating signal from the at least one regulating interface (32); and
read a second input regulating signal from the at least one regulating interface (32), the second input regulating signal being different from the first input regulating signal;
employ the arithmetic logic unit (33) to compare the first input regulating signal and the second input regulating signal to the signal regulating range;
if the first input regulating signal and the second input regulating signal fall within and/or match the signal regulating range:
   employ the arithmetic logic unit (33) to map the first input regulating signal to the input maximum valve position; and
   employ the arithmetic logic unit (33) to map the second input regulating signal to the input maximum valve position.

It is envisaged that the signal regulating range runs
from 0 Volt to 2 Volts, or
from 0 Volt to 3 Volts, or
from 0 Volt to 3.3 Volts, or
from 0 Volt to 5 Volts, or
from 0 Volt to 10 Volts, or
from 0 millliAmpere to 20 milliAmperes.

The at least one signal regulating interface (32) advantageously comprises an analog interface. The at least one signal regulating interface (32) ideally comprises an analog-to-digital converter and/or a delta-sigma modulation circuit. An analog interface affords compatibility with commercially available equipment for supervisory control.

It is envisaged that the at least one signal regulating interface (32) is an integral part of the controller (29). That is, the at least one signal regulating interface (32) and the controller (29) are part of the same system-on-a-chip. This type of arrangement results in a compact pressure independent valve. Also, the complexity of the circuitry is reduced.

The present disclosure still teaches a non-transitory, computer-readable medium containing a program which executes the steps of a method according to the present disclosure.

It is envisaged that the computer-readable medium contains instructions that when executed perform the steps and/or perform the method according to the present disclosure. It is also envisaged that the computer-readable medium is tangible.

Any steps of a method according to the present disclosure may be embodied in hardware, in a software module executed by a processor, in a software module being executed using operating-system-level virtualization, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

### Reference numerals

- 1: valve body
- 2: inlet port
- 3: outlet port
- 4: fluid path
- 5: throttle
- 6: stem
- 7: arrow indicating possible movements of the stem 6
- 8: bearing surrounding the stem 6
- 9: displaceable element (comprising a piston)
- 10: cover
- 11: guide element
- 12: sleeve
- 13: bias element
- 14: head
- 15: reservoir
- 16: passageway
- 17: aperture
- 18: rolling diaphragm
- 19: adjusting bolt
- 20: telescopic stem
- 21: seat of the throttle 5
- 22: collar
- 23: axis for the flow rate through the valve
- 24: axis for the pressure difference
- 25: onset of constant flow
- 26: variation of maximum flow
- 27: proportional regime of flow rate versus pressure difference
- 28: variation of onset of constant flow
- 29: controller
- 30: actuator
- 31: analog actuator interface
- 32: signal regulating interface
- 33: arithmetic logic unit
- 34: input unit
- 35: memory

## Claims

1. A pressure independent control valve, the pressure independent control valve being configured such that a maximum valve position indicative of a flow rate limit can be set so that a flow rate through the pressure independent control valve is less than or equals the flow rate limit;
wherein the pressure independent control valve is configured such that the maximum valve position of the pressure independent control valve can be set as a part value with respect to a complete opening of the pressure independent control valve;
wherein a first operating range of the pressure independent control valve can be set as a range between the set maximum valve position and a closed position of the pressure independent control valve;
wherein a signal regulating range of the pressure independent control valve can be mapped onto the first operating range;
wherein the pressure independent control valve comprises a controller (29) in which the maximum valve position can be input electronically for defining a second operating range of the pressure independent control valve as arranged between the input maximum valve position and the closed position; and
wherein the controller (29) comprises an arithmetic logic unit (33), the controller (29) being configured to employ its arithmetic logic unit (33) to map the signal regulating range onto the second operating range.

2. The pressure independent control valve according to claim 1, wherein the arithmetic logic unit (33) is configured to perform operations selected from
- addition,
- subtraction,
- logical AND, and
- logical OR.

3. The pressure independent control valve according to any of the claims 1 to 2, the pressure independent control valve comprising at least one inlet port (2), at least one outlet port (3), and at least one fluid path (4) extending between the at least one inlet port (2) and the at least one outlet port (3);
the pressure independent control valve comprising at least one throttle (5) situated in the at least one fluid path (4); and
the pressure independent control valve being configured such that the input maximum valve position is also indicative of a maximum position of the at least one throttle (5).

4. The pressure independent control valve according to claim 3, wherein the at least one throttle (5) is movable between the closed position and the maximum valve position.

5. The pressure independent control valve according to claim 4, wherein the at least one throttle (5) is continuously movable between the closed position and the maximum valve position.

6. The pressure independent control valve according to claim 5, wherein the closed position of the pressure independent control valve is associated with a closed position of the at least one throttle (5), the at least one throttle (5) in its closed position obturating fluid flow through the at least one fluid path (4).

7. The pressure independent control valve according to any of the claims 3 to 6, wherein the pressure independent control valve additionally comprises at least one actuator (30), the at least one actuator (30) mechanically coupling to the at least one throttle (5);
wherein the controller (29) additionally comprises at least one analog actuator interface (31), the controller (29) being in operative communication with the at least one actuator (30) via the at least one analog actuator interface (31);
wherein the controller (29) is configured to send a signal indicative of a valve position to the at least one actuator (30) via the at least one analog actuator interface (31); and
the signal indicative of a valve position causing the at least one actuator (30) to stroke the at least one throttle (5) to the indicated valve position.

8. The pressure independent control valve according to claim 7,
wherein the controller (29) is configured to send a signal indicative of the input maximum valve position to the at least one actuator (30) via the at least one analog actuator interface (31); and
wherein the signal indicative of the input maximum valve position causes the at least one actuator (30) to stroke the at least one throttle (5) to the input maximum valve position.

9. The pressure independent control valve according to any of the claims 3 to 8,
wherein the flow rate through the pressure independent control valve is associated with a flow rate through the at least one fluid path (4);
wherein the complete opening of the pressure independent control valve is associated with a completely open position of the at least one throttle (5); and
wherein any movement of the at least one throttle (5) starting at the completely open position of the at least one throttle (5) reduces the flow rate through the at least one fluid path (4) or maintains a same flow rate through the at least one fluid path (4).

10. The pressure independent control valve according to claim 9, the pressure independent control valve comprising at least one chamber in fluid communication with the at least one inlet port (2) such that the pressure independent control valve is configured to apply substantially the same pressure at the at least one inlet port (2) and inside the at least one chamber; the at least one fluid path (4) comprising a fluid channel;
at least one displaceable element (9) having at least one piston, the at least one displaceable element (9) separating the at least one chamber from the fluid channel;
the at least one displaceable element (9) being moveable to increase a volume of the at least one chamber and to decrease a volume of the fluid channel such that the at least one displaceable element (9) lowers the flow rate through the at least one fluid path (4); and
the pressure independent control valve comprising at least one biasing member (13) configured to urge the at least one displaceable element (9) such that the at least one biasing member (13) urges the volume of the at least one chamber to decrease and the volume of the fluid channel to increase, thereby increasing the flow rate through the at least one fluid path (4).

11. The pressure independent control valve according to claim 10, the pressure independent control valve comprising a valve body (1), the valve body (1) comprising the at least one inlet port (2) and the at least one outlet port (3); and
the at least one displaceable element (9) comprising at least one diaphragm (18) mechanically mounted to the valve body (1).

12. The pressure independent control valve according to any of the claims 1 to 11, the pressure independent control valve comprising at least one input unit (34) in operative communication with the controller (29);
wherein the controller (29) is configured to:
read a setting signal from the at least one input unit (34); and
set the input maximum flow position based on the setting signal as a part value with respect to the complete opening of the pressure independent control valve.

13. The pressure independent control valve according to any of the claims 1 to 12, wherein the signal regulating range comprises a first regulating signal and a second regulating signal and a third regulating signal, the controller (29) being configured to:
employ the arithmetic logic unit (33) to map the first regulating signal to the input maximum valve position;
employ the arithmetic logic unit (33) to map the second regulating signal to the input maximum valve position, the second regulating signal being different from the first regulating signal; and
employ the arithmetic logic unit (33) to map the third regulating signal to a valve position between the closed position and the input maximum valve position, the third regulating signal being different from the first regulating signal and being different from the second regulating signal.

14. The pressure independent control valve according to claim 13, wherein the signal regulating range comprises a fourth regulating signal, the controller (29) being configured to:
employ the arithmetic logic unit (33) to map the fourth regulating signal to the closed position, the fourth regulating signal being different from the first regulating signal and being different from the second regulating signal and being different from the third regulating signal.

15. The pressure independent control valve according to any of the claims 1 to 14, the pressure independent control valve comprising at least one regulating interface (32) in operative communication with the controller (29);
wherein the controller (29) is configured to:
read an input regulating signal from the at least one regulating interface (32);
employ the arithmetic logic unit (33) to compare the input regulating signal to the signal regulating range; and
if the input regulating signal falls within the signal regulating range:
employ the arithmetic logic unit (33) to map the input regulating signal to a valve position falling within the second operating range.
